(19) Europäisches Patentamt
European Patent Office
Office européen des brevets

(11) **EP 4 617 902 A1**

(12) **EUROPEAN PATENT APPLICATION**

(43) Date of publication:
**17.09.2025 Bulletin 2025/38**

(21) Application number: **24315094.3**

(22) Date of filing: **15.03.2024**

(51) International Patent Classification (IPC):
**G06F 16/2458** (2019.01)     **G06N 3/045** (2023.01)

(52) Cooperative Patent Classification (CPC):
**G06F 16/2471; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Amadeus S.A.S.**
**06410 Biot (FR)**

(72) Inventors:
• **Gentric, Philippe**
**06410 Biot (FR)**

• **Devaux, Yannick**
**06410 Biot (FR)**
• **Le Toquin, Youri**
**06410 Biot (FR)**
• **Candela, Rosa**
**06410 Biot (FR)**
• **Bianchi, Julien**
**06410 Biot (FR)**
• **Autran, Sebastien**
**06410 Biot (FR)**

(74) Representative: **Samson & Partner Patentanwälte mbB**
**Widenmayerstraße 6**
**80538 München (DE)**

(54) **SEARCH REQUEST PROCESSING**

(57)     Method, systems and computer programs for handling search requests at a search platform are provided. The search platform receives a search request determining a number of search results by generating one or more values for a first set of data fields by using a generative artificial intelligence model and determining, on the basis of the generated one or more values for the first set of data fields and by using the database system, one or more values for a second set of data fields. The search platform assembles a number of completed search results on the basis of the generated first set of data fields and the determined second set of data fields and returns at least one of the completed search results.

FIG. 1

EP 4 617 902 A1

**Description**

**FIELD**

The present disclosure relates to an information technology method and a system. More specifically, it relates to database search and computation technology providing search results in response to search requests.

**BACKGROUND**

Search requests from clients to a search system typically include one or more search parameters and corresponding values which indicate requested search results. A platform processes a search request, identifies one or more search results being in accordance with the search parameter values and returns the search results to the client.
Multiple sources for search response data determination may be present, wherein these multiple sources may incorporate different characteristics in terms of response times, processing resources, data validity and freshness, etc. Thus, degrees of freedom exist for the search system how to utilize such sources in order to prepare search response data.
In recent years, there has also been an increasing interest in using artificial intelligence (AI) and machine-learning (ML) techniques to improve search platforms. These techniques offer the potential to improve the accuracy and relevance of search results by learning from user behavior and adapting to changing user needs. One type of machine learning network is a Generative Adversarial Network (GAN). For example, US 11,651,205 B2 presents a solution that involves training a Wasserstein generative adversarial network, adapted to a loss function, a term representing a violation of a Lipschitz condition, and a method of virtual adversarial training. US 10,642,846 B2 proposes a computer-implemented technique for providing a digital content item using a generator component. The generator component of a GAN is a sequence-to-sequence neural network. Query and key terms are generated and selected, and a content item is sent over the network to the user computing device. US 11,481,416 B2 introduces a question/answer system that uses a trained generator of a GAN to generate output representing unlabeled data for natural language processing. The discriminator of the GAN obtains candidate answers and generates a confidence score associated with each answer, which is used to select at least one final answer on the input natural language question.
Attention is drawn to improving the operating mechanisms underlying the processing of search requests with respect to efficient handling of subsequent search requests.

**SUMMARY**

The present disclosure seeks to provide improvements of the existing search methodologies, in particular in the area of search request processing and determination of search response data to be returned in response to a search request. The present mechanisms are set forth by the independent claims.
According to a first aspect, a method for processing search requests at a search platform is provided. The search platform is communicatively coupled to a plurality of clients as well as, via a communication interface, to a database system. The search platform determines, in response to receiving a search request from one of the plurality of clients requesting one or more search results comprising at least two sets of data fields, namely a first set of at least one data field and a second set of at least one data field, a number of search results corresponding to the search request. To determine the search results, the search platform generates one or more values for the first set of data fields by using a generative artificial intelligence model. The search platform determines, on the basis of the generated one or more values for the first set of data fields and by using the database system, one or more values for the second set of data fields. The search platform assembles one or more search results comprising the generated one or more values for the first set of data fields and the determined one or more values for the second set of data fields and returns the at least one search result to the client.
In some embodiments, determining a number of search results corresponding to the search request further comprises validating the generated one or more values for the first set of data fields by using a machine-learning model.
In some embodiments, validating the generated one or more values for the first set of data fields by using a machine-learning model comprises determining, using the machine-learning model, that a first generated value for the first set of data fields is likely to correspond to data retrievable from the database system and using the first generated value to determine the one or more values for the second set of data fields and determining, using the machine-learning model, that a second generated value for the first set of data fields is unlikely to correspond to data retrievable from the database system and discarding the second generated value.
In some embodiments, determining, using the machine-learning model, that a first generated value for the first set of data fields is likely to correspond to data retrievable from the database system comprises determining a confidence level of the first generated value for the first set of data fields being at least at a given confidence threshold.
In some embodiments, the confidence threshold is set by the search request.

In some embodiments, the generative artificial intelligence model and the machine-learning model constitute a conditional generative adversarial network, wherein the generative artificial intelligence model is the generator of the conditional generative adversarial network and the machine-learning model is the discriminator of the conditional generative adversarial network.

According to a second aspect, a computing system is provided comprising the computing platform, wherein the computing system is arranged to perform the aforementioned method aspect and embodiments.

Finally, a computer program is presented that comprises instructions which, when the program is executed by a computer, cause the computer to carry out the aforementioned method aspect and embodiments when executed by the computer.

Further refinements are set forth by the description.

These and other objects embodiments and advantages will become readily apparent to those skilled in the art from the following detailed description of the embodiments having reference to the attached figures, the invention not being limited to any particular embodiments.

## BRIEF DESCRIPTION OF THE FIGURES

Aspects and examples of the present disclosure are described with reference to the following figures, in which:

FIG. 1 illustrates a distributed search system as described herein.

FIG. 2 is a flow chart visualizing the present methodologies at a general level of abstraction.

FIG. 3 is a message sequence chart visualizing the present methodologies still at a general level of abstraction.

FIG. 4 shows a generic example of first data fields still to be generated and second data fields.

FIG. 5 represents message exchange relating to the data field example of FIG. 4.

FIG. 6 illustrates generated first data fields.

FIG. 7 relates to validation of generated first data fields.

FIG. 8 shows first data field generation by using a generator of the conditional generative adversarial network and validation of generated first data fields by a discriminator of the conditional generative adversarial network.

FIGS. 9A and 9B visualize a non-limiting example of the search platform being a journey server.

FIG. 10 is a diagrammatic representation of the internal components of a computing device as described herein.

## DETAILED DESCRIPTION

The present disclosure addresses a technical problem in information technology, and more specifically in search systems which process search requests from a client. A search request sent by and received from a client includes one or more search parameters, i.e. one or more parameter-value _pairs, which indicate a strict or fuzzy search space limitation. The search system is arranged to process the search request in particular by determining a number of search results which correspond to the parameter value pairs in the search request and to return the search results. In order to fulfil this functionality, the search system typically includes one or more search platforms, e.g. a computerized machine, equipped with hardware and software to process the search request, take measures to identify search results corresponding to the search parameters and returning, if at least one search result has been identified, the at least one search result to the requesting client.

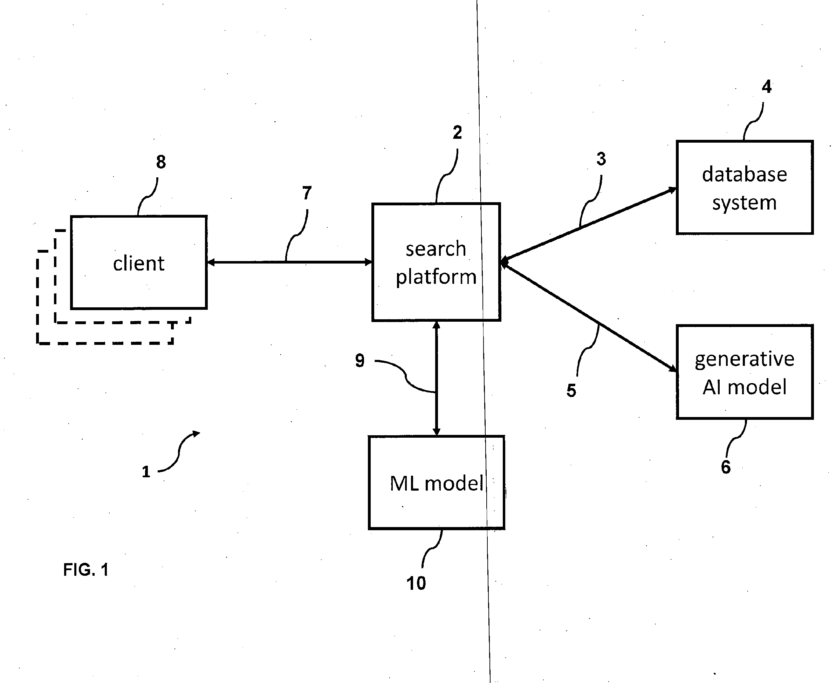

A typical, simplified and schematic search system 1 is shown by FIG. 1. The search system 1 includes the search platform 2 which is communicatively coupled to one or more clients 8 over a communication interface 7. The communication interface 7 may utilize any sorts of communication technology such as wired and/or wireless communication and/or mobile communication networks, one or more local area network, and/or one or more wide area networks such as the Internet, as well as any sorts of communication protocols such as WiFi, Ethernet, Internet Protocol (IP), Transport Control Protocol (TCP), Hypertext Transfer Protocol (HTTP) and others. Search requests from the client(s) 8 and responses to the search requests are sent over the communication interface 7.

Typically, the search platform 2 may have access to data sources which may be geographically and/or operationally co-located with the search platform 2. For example, the search platform 2 may be communicatively coupled, via a further communication interface 3, to one or more databases 4 storing or being arranged to dynamically compute search result data. For example, the database system 4 may store or compute data which is valid at request or computation time and can thus be denoted as original data. The database system 4 may be accessible by the search platform 2 via a communication interface 3. Contacting the original data source 4 may involve significant overhead, e.g. by being more time consuming and/or involving more processing resources, to determine any content for preparing search results in response to a search request. Additionally or alternatively, also the interface 3 may face technical limits, e.g. a limited number of connections, sockets or ports being available at a given time. Thus, the search platform 2 may be forced to limit the number of requests directed to the database system 4 in order to efficiently prepare response data to be returned to a requesting client 8.

On the other hand, the search platform 2 may also be capable of generating search result data dynamically in response to receiving a search request. To this end, for example, the search platform 2 accesses a generative artificial intelligence (AI) model 6 via a still further communication interface 5. the generative AI model 6 may be hosted geographically co-located with the search platform 2, but may also be located remotely and accessible e.g. via a cloud service. Irrespective of the geographical location, the generative AI model 6 is considered to form an operational part of the search platform 2 as the generative AI model 6 is specifically trained and adapted to generate the data fields for the search responses to be returned by the search platform 2. In terms of response times and network load, generating search result data by using the generative AI model 6 may be more efficient compared to retrieving search result data from any other data source such as the database system 4.

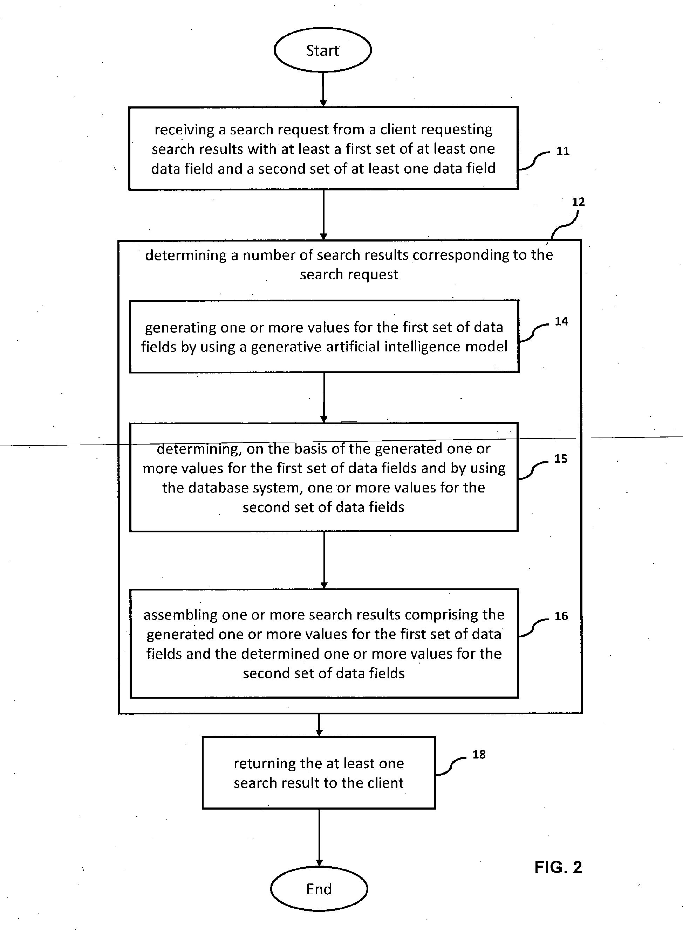

These data sources available to the search platform 2 are utilized according to the present disclosure as follows. According to an aspect, a method for processing search requests at a search platform is provided (FIG. 2). Generally, the search results to be returned by the search platform 2 can be split into two parts, namely first data fields and second data fields. The content of the first data fields is generated by way of the generative AI model 6, while the second data fields are then determined using the database system 4.

With reference to FIG. 2, in response to receiving 11 a search request from one of the plurality of clients requesting one or more search results comprising at least two sets of data fields, namely a first set of at least one data field and a second set of at least one data field, the search platform 2 determines 12 a number of search results corresponding to the search request. Determining 12 includes a number of activities. The search platform 2 first generates 14 one or more values for the first set of data fields by using the generative AI model 6. The generative AI model 6 employed in the present disclosure may be based on various types of artificial intelligence algorithms, such as deep learning, neural networks, or other suitable algorithms. The AI model 6 is trained to generate one or more values for a first set of data fields in response to receiving a search request from a client, which may include text, images, audio, or other types of data.

Afterwards, the search platform 2 determines 15, on the basis of the generated one or more values for the first set of data fields and by using the database system 4, one or more values for the second set of data fields. Note that the type and organization of the database system 4 is not limited herein. For example, the database system 4 may be a SQL or non-SQL database looking up data or documents in response to search constraints, but may also involve complex and dynamic computation using rules. The database system 4 may store various types of data, such as text, images, audio, video, or other types of data, which may be organized in various ways, such as in tables, documents, or other suitable data structures.

With continuing reference to FIG. 2, the search platform 2 then assembles 16 one or more search results comprising the generated one or more values for the first set of data fields and the determined one or more values for the second set of data fields and returns 18 the at least one search result to the client 8.

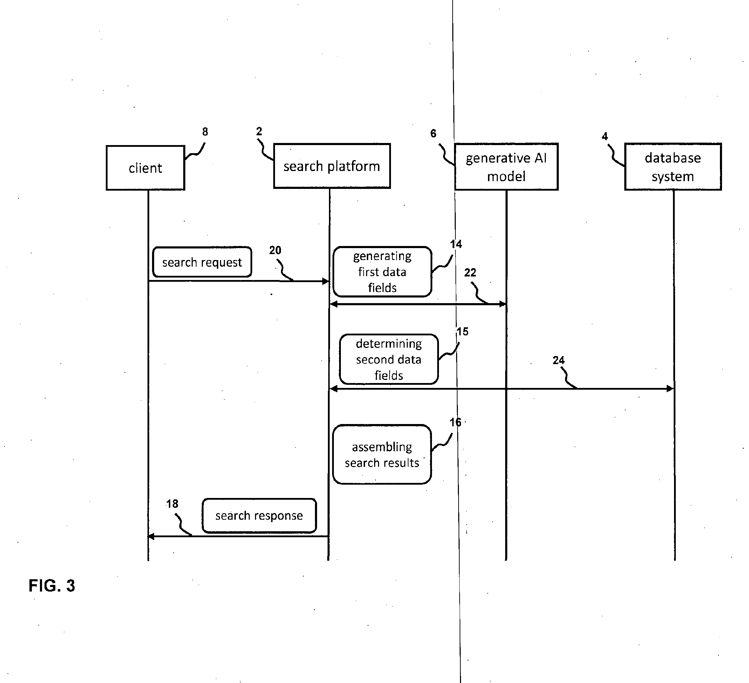

Another representation of this procedure is given by the message sequence chart of FIG. 3. The client 8 sends 20 a search request to search platform 2. The search request indicates one or more search parameters, for example one or more ranges of values for a data field, a lower value boundary for a data field, an upper value boundary for a data field, a specific value for a data field, a specific value with some tolerances for a data field, etc. The search parameter(s) indicated in the search request may refer at least to one or more of the first data fields. Additionally, the search parameter(s) indicated in the search request may refer to one or more of the second data fields. The search platform 2 receives and processes the search request 20.

The search platform 2 processes the search request 20 in multiple stages. First, the search platform 2 generates 14 one or more first data fields by using the generative AI model 6. The search platform 2 may generate content for as many sets of first data fields fulfilling the at least one search parameter corresponding to at least one search parameter indicated in the search request with the generative AI model 6 as sensible for the particular use case. Alternatively, the search platform 2 may apply a cap limiting the number of sets of first data fields, even if the generative AI model 6 may generate more content beyond the cap. For example, the generative AI model may generate 20 sets of first data fields corresponding to the search parameters indicated in the search request, but the search platform 2 may maintain only 8 of the 20 sets of generated first data fields and may discard the other 12 sets of generated first data fields. The cap may also be indicated in the search request.

Next, the search platform 2 determines 15 a set of second data fields for each of previously determined set of generated first data fields. To this end, the search platform 2 may interrogate 24 the database system 4, e.g. sending a request with one or more search parameters indicated in the search request relating to the second data field(s) and also with information about the generated first data fields. In turn, the database system 4 responds with content of the second fields which is in line with the one or more set of generated first data fields and any search parameter in the search request specifying second data fields.

After the second data fields have been determined, the search platform 2 assembles 16 one or more completed search results. To this end, for a set of first data fields, the search platform 2 may add (e.g. concatenate, integrate) the corresponding one or more second data fields retrieved from the database system 4 to build the resulting search results, so that the resulting search results include both, the first and the second data fields. The search platform 2 may then return 18 one or more of the assembled completed search results to the client 8 by way of a search response.

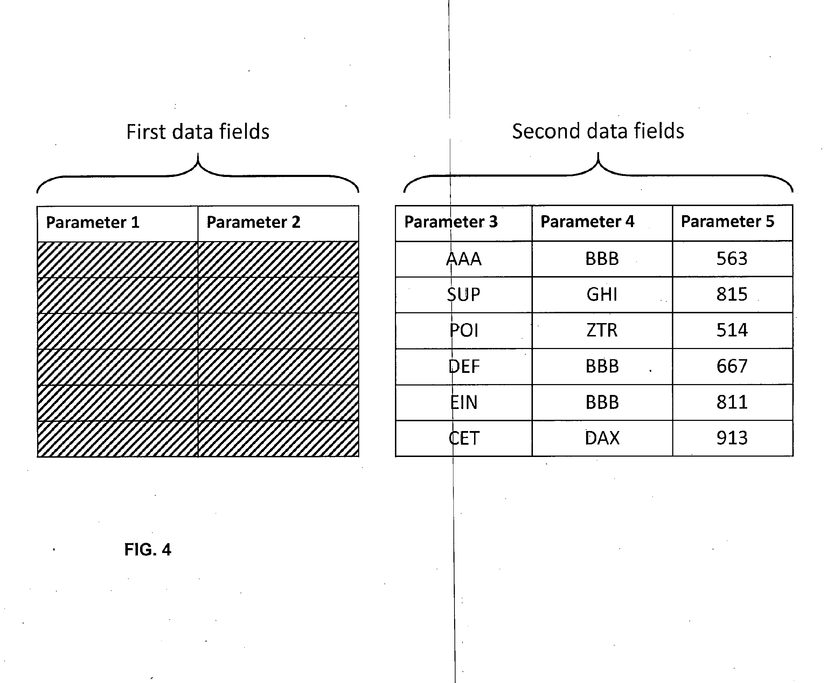

An example (using generic content) of first and second data fields is given by FIGS. 4 to 6. FIG. 4 depicts six first data fields (Parameter 1, Parameter 2) that are not statically stored in a database or cache 4, but are dynamically generated by using the generative AI model 6 in response to a search request. The exemplary number of six is illustrative only - the generative AI model 6 may generate any feasible number of sets of first data fields for a certain input vector and this number may vary from search request to search request. The six exemplary sets of respective three second data fields (Parameter 3, Parameter 4, Parameter 5) and corresponding values are stored in the database system 4.

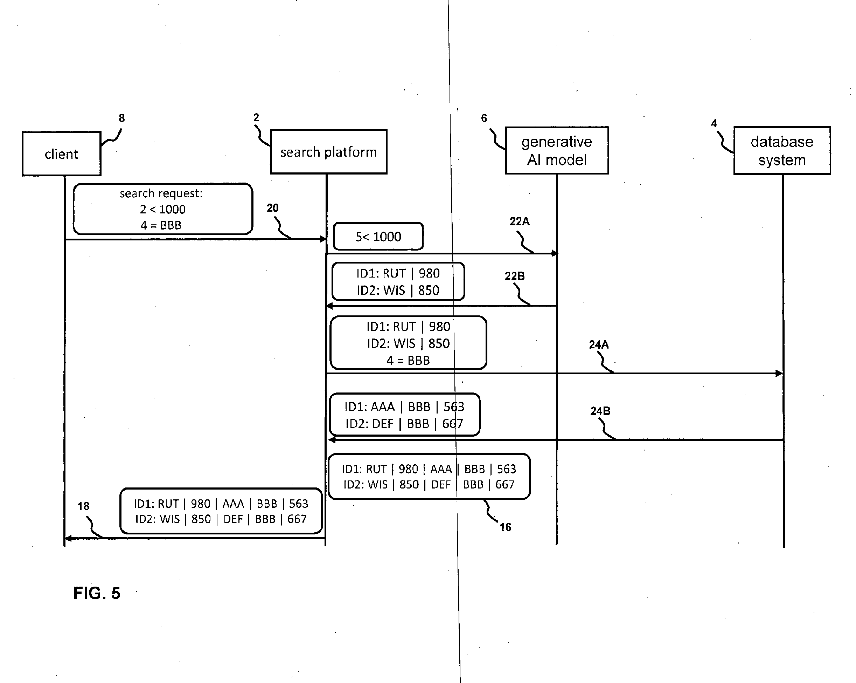

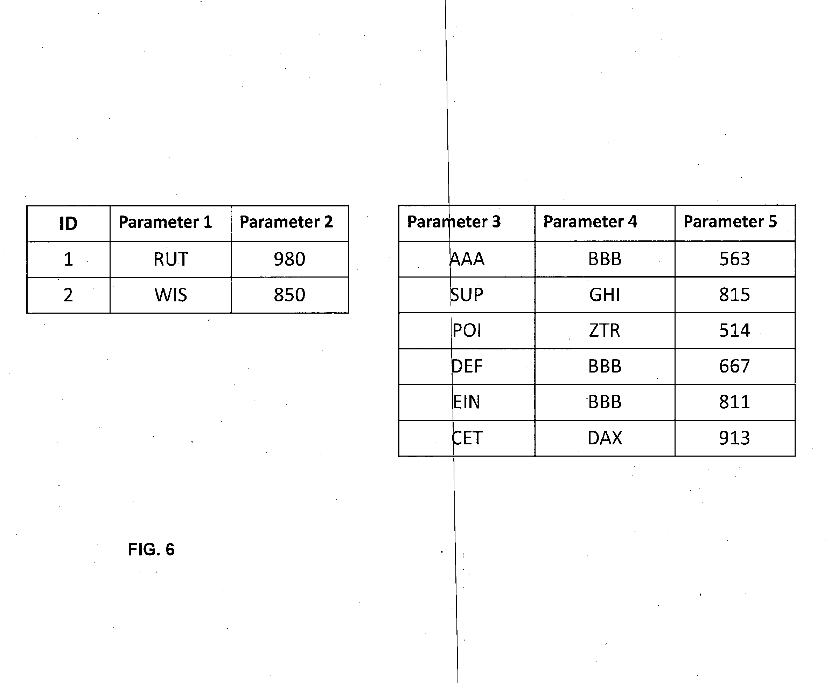

For example, the search request received from the client 8 may indicate two search parameters, a value of 1000 as upper limit for Parameter 2, i.e. one of the first data fields (FIG. 5) and the value BBB for Parameter 4, i.e. one of the second data fields. First, the search platform 2 seeks to generate content for the first data fields (Parameter 1 and Parameter 2). To this end, the search platform 2 sends a request 22A to the generative AI model 6, indicating the search parameter indicated in the search request relating to the first data fields for which the generative AI model 6 is responsible, i.e. the upper limit of 1000 for Parameter 2. The request 22A may also indicate further information, such as a number of sets of first data fields sought (e.g. at least two sets of first data fields), a certain minimum variation of the content, and others. The information is input into the generative AI model 6 as an input vector. The generative AI model 6 generates e.g. two sets of second data fields which are given identifiers (at least temporarily unique within the search system 1) for reference to facilitate further processing (ID1: RUT | 980 and ID2: WIS | 850, cf. FIG. 6).

After the first data fields are returned 22B to the search platform 2, the search platform requests 24A such data records stored in the database system 4 which comprise the value BBB in Parameter 4. The database request 24A may also indicate the aforementioned identifiers in order to enable the search platform 2 to associate the response 24B from the database system 4 with the generated first data fields. The database request 24A may also indicate information about the generated first data fields, such as the first data fields themselves, in order to enable the database system 4 to identify such second data fields that are consistent with the generated first data fields. In some embodiments, not all first data fields may be relevant for the database system 4 in order to identify fitting second data fields, so that only a subset of the first data fields are passed to the database system 4 for determining the second data fields.

The database system 4 identifies two such data records and returns 24B these two data records (AAA | BBB | 563 and DEF | BBB | 667, cf. FIG. 4) as second data fields to the search platform 2. In the example of FIG. 6, a third set of second data fields (EIN | BBB | 811, cf. FIG. 4) is not provided 24B back to the search platform, e.g. because the value of Parameter 5 would be inconsistent with the values of Parameters 1 and 2 of the first data fields or because only two sets of second data fields are called and the database system 4 determined the top two data records of a determined sorted longer list of data records. The determined content is received 24B by the search platform 2 which then assembles 16 two completed search results by concatenating the first and second data fields and then returns 16 the completed search results to the client 8.

Similar procedures are performed in the event of more search parameters included in the search request. With reference to the example of FIG. 4, the search request may include search parameters for all two first data fields as well as search parameters for all three second data fields. More generally, in some embodiments according to the disclosure, the search request indicates at least two search parameters, wherein at least one first search parameter relates to at least one first data field and at least one second search parameter relates to at least second data field, as described above with reference to FIGS. 4 to 6. In such embodiments, the method comprises generating the one or more sets of first data fields that correspond to the at least one first data parameter (in the example of FIGS. 4 and 5: Parameter 2 with upper limit 1000) and, for each generated set of first data fields, determining the at least one second data field using the database system 4, wherein the at least one second data field corresponds to the at least one second search parameter (in the example of FIGS. 4 and 5: Parameter 5 with value BBB) and the at least one first data field of each set of first data fields.

In some embodiments according to the present disclosure, the search request includes one or more search parameters relating to the first data fields, but no search parameters relating to the second data fields. In such embodiments, the search platform 2 generates one or more sets of first data fields using the generative AI model 6 on the basis of the search parameters indicated in the search request. The one or more second data fields are then retrieved from the database system 4 without additional restrictions, i.e. in accordance with the generated first data fields and, thus, in accordance with the one or more search parameters relating to the first data field(s).

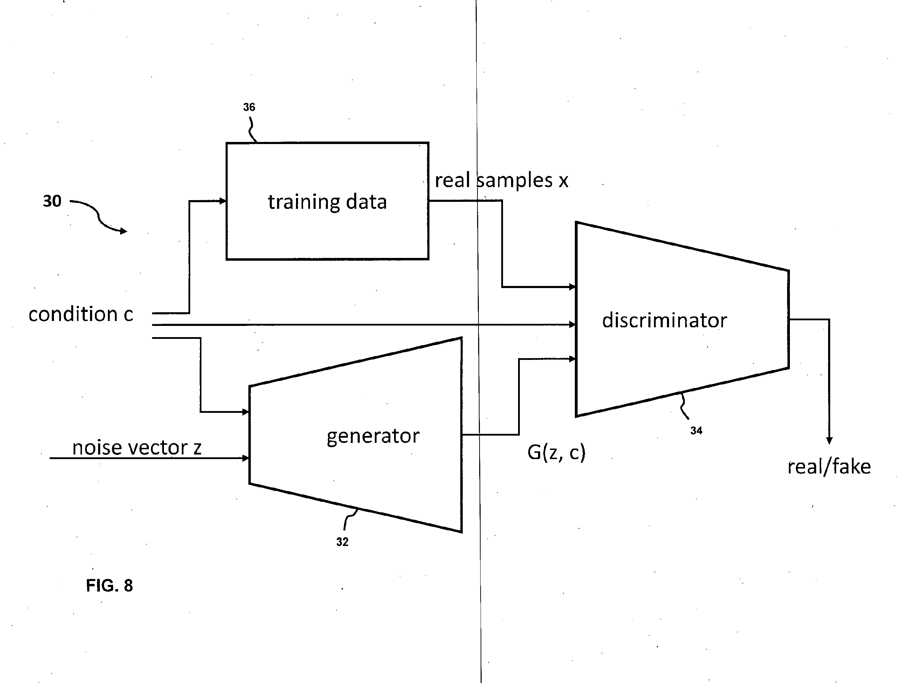

Generally, training of the generative AI model 6 can be facilitated by historic real data, e.g. with the content of the first data fields originating from any existing data sources which, according to the present disclosure, are to be replaced by content generation using the generative AI model 6. For example, the generative AI model 6 may be trained using content obtained from an original data source 4 in response to an initial search request and additional content obtained from the original data source 4 in response to a follow-up search request requesting an update of search results provided in response to the initial search request (cf. scenario discussed with reference to FIG. 8 further below). Hence, training may convey a relation between initial and updated search result content.

In order to ensure performance and deterministic response times (also vis-à-vis the requesting client 8), the generative AI model 6 may run on special hardware and a dedicated platform. For example, the generative AI model 6 may be executed on a hardware-accelerated platform, besides one of more Central Processing Units (CPU) equipped with a number of specialized processors specifically arranged for the execution of AI-related operations. For example, the hardware platform of the generative AI model 6 may include a number of Graphics Processing Units (GPU) and/or Tensor Processing Units (TPU) which execute particular operations such as matrix multiplications to generate the output of the generative AI model 6.

In some embodiments, determining a number of search results corresponding to the search request further comprises validating the generated one or more values for the first set of data fields by using a machine-learning model. To this end, referring back again to FIG. 1, the search system 1 may also include the machine-learning (ML) model 10 which may be communicatively coupled over a communication interface 9 with the search platform 2. The communication interface 9 may have similar technical characteristics as the communication interface 5 to the generative AI model 6. Additionally or alternatively, the ML model 10 may also be directly coupled with the generative AI model 6, e.g. both models may form a combined larger AI/ML model as exemplarily described further below.

Irrespective from the particular architecture, the ML model 10 is handed over the output of the generative AI model 6 in order to validate the results produced by the generative AI model 6. This avoids hallucination effects or otherwise incorrectly generated first data fields which may not have any counterpart data stored in the database system 4 as no consistent second data fields would exist. Such validation by the ML model 10 therefore helps to avoid data retrieval attempts from the database system 4 which would not yield any second data fields being consistent with first data fields generated by the generated AI model 6.

For example, the ML model 10 may also be based on various types of machine-learning algorithms, such as supervised learning, unsupervised learning, reinforcement learning, or other suitable algorithms. For example, the ML model 10 is a deep neural network. The ML model 10 may be trained using training data with known data field values and corresponding search results to determine the likelihood of the generated values corresponding to data retrievable from the database system 4. The ML model 10 may be specifically trained to check first data fields produced by the generative AI model 6 and determine a confidence level for the first data fields. If the confidence level determined by the ML model 10 meets at least a given threshold, a first data field generated by the generative AI model 6 is assessed to be likely valid, i.e. is likely to correspond to some real first data field. Otherwise, i.e. when the confidence level is below the given threshold, the first data field is assessed to be likely invalid, i.e. is unlikely to correspond to some real first data field.

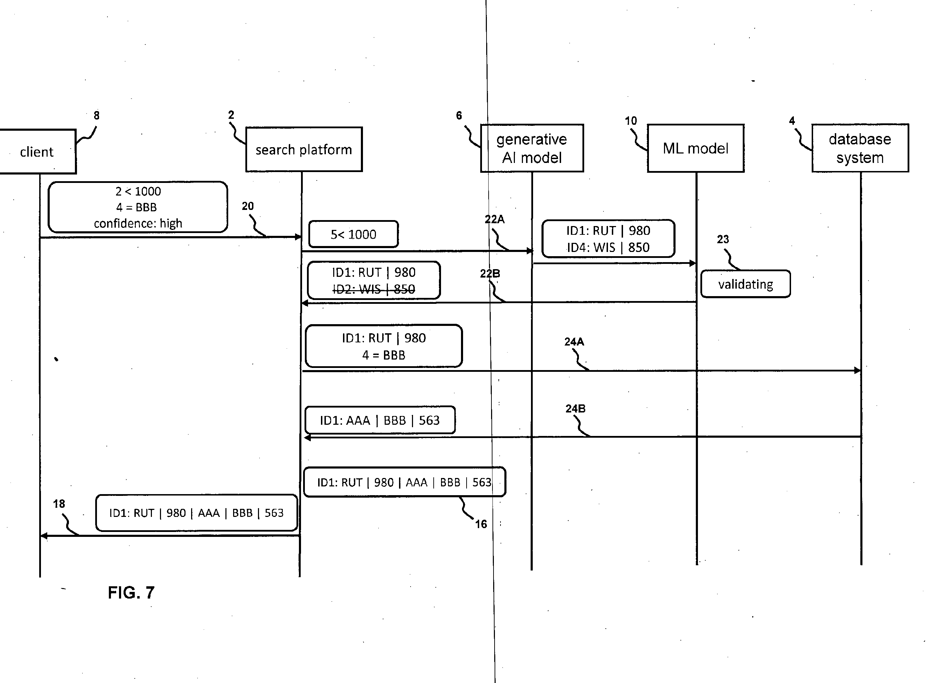

In some embodiments, the confidence threshold may be set by the search request. For example, the search request may indicate a confidence level being one of three levels (e.g. low, medium, high, cf. search request of FIG. 7) which may be translated by the search platform to a normalized comparison value or range (e.g. low = 0 - 0.3, medium = 0.3 - 0.6, high = 0.6- 1). The ML model 10 may then output a normalized confidence level for each first data field generated by the generative AI model 6 and the search platform 2 may then compare the confidence level of each first data field against the confidence level range set according to the search request.

For example, in some embodiments, validating the generated one or more values for the first set of data fields by using the ML model 10 comprises determining, using the ML model 6, that a first generated value for the first set of data fields is likely to correspond to data retrievable from the database system 4 (or any other reliable source accessible by the search platform 2) and using the first generated value to determine the one or more values for the second set of data fields. Thus, such first data fields generated by the generative AI model 6 are further utilized to obtain corresponding second data fields from the database system 4. Alternatively, the search platform 2 may determine, using the ML model 10, that a second generated value for the first set of data fields is unlikely to correspond to data retrievable from the database system 4 (or any other reliable source accessible by the search platform 2) and discard the second generated value. Hence, such first data fields assessed to be invalid are not further utilized to obtain second data fields from the database system 4.

An example of a validation process by using the ML model 10 is given by FIG. 7 which is a variation of FIG. 5. Here, the two first data fields generated by the generative AI model 6 (ID1: RUT | 980and ID2: WIS | 850, cf. FIG. 6) are first passed over to the ML model 10 for validation 23. The ML model 10 examines both first data fields and, in the example of FIG. 7, determines that ID1: RUT | 980 is valid, but ID2: WIS | 850 is invalid. Accordingly, the second first data field ID2: WIS | 850 is discarded from the further process and only the first first data field ID1: RUT | 980 is provided 22B to the search platform 2. The database request 24A then only indicates the first data field ID1: RUT | 980, but not the discarded second first data field ID2: WIS 1850 to the database system 4. Accordingly, in the example of FIG. 7, the database system 4 would only return 24B the second ID1: AAA | BBB | 563 and the search platform 2 would assemble 16 and return 18 one complete search result.

Note that, generally, the number of second data fields provided by the database system 4 is not necessarily the same number of first data fields generated by the generative AI model 6. For example, not every first data field generated by the generative AI model 6 may have a matching second data field in the database system 4. This may, for example, be the case if a first data field generated by the generative AI model 6 is actually fake data and was not recognized to be invalid by the ML model 10. Alternatively, the database system 4 may also return more than one second data field for a generated first data field, e.g. if the database system 4 holds or computes more than one second data field matching a first data field. Thus, for example, in the scenario of FIG. 7, although the generative AI model 6 produced only one first data field which the ML model 10 determined 23 to be valid, the database system 4 may output two or three second data fields being consistent with the first data field ID1: RUT | 980 and also the additional constraint that Parameter 4 should be BBB, e.g. also DEF | BBB 1667. The search platform 2 may then assemble 16 and return 18 two completed search results, namely ID1: RUT | 980 | AAA | BBB | 563 and ID2: RUT | 980 | DEF | BBB | 667.

In some embodiments, the generative AI model 6 is or comprises a conditional generative adversarial network (conditional GAN). A Generative Adversarial Network (GAN) is a specific type of machine learning model which is composed of two neural networks, referred to as the generator and the discriminator. Both neural networks are trained simultaneously through a competitive process and may be utilized for different, complementary purposes.

The generator takes random noise as input and generates synthetic data samples, such as images, audio, or text, that mimic the provision of real data. The goal of the generator is to produce high-quality synthetic data samples that are as indistinguishable from real data as possible. On the other hand, the discriminator is arranged to distinguish between real data samples and the synthetic samples produced by the generator. To this end, the discriminator is trained on a dataset containing both real and synthetic data samples. The discriminator's objective is to classify real data as real and fake data as fake as correctly as possible.

The generator and discriminator are trained in an adversarial manner. The generator tries to improve its ability to generate realistic samples by producing data that increasingly fools the discriminator. The discriminator tries to become better at distinguishing between real and fake samples. As training progresses, the generator and discriminator engage in a zero-sum game, trying to outperform each other. Ideally, this adversarial process leads to the generator generating increasingly realistic samples, while the discriminator becomes increasingly skilled at distinguishing between real and fake data.

As exemplified by the documents cited in the introduction, US 11,651,205 B2, US 10,642,846 B2 and US 11,481,416 B2, GANs are used to generate validated content, i.e. they address some of the challenges in generating and validating search results using AI and machine-learning models, limitations in efficiently generating and validating search results for various types of data fields and ensuring that the generated search results are valid still exist.

According to the present disclosure, a conditional GAN 30 (FIG. 8) is an extension of such GAN and is also utilized in a specific manner and for a specific technical purpose. The generator 32 is, for example, a deconvolutional network (DN) and takes as input a random noise vector z which may originate from a random distribution. The noise input is accompanied by conditional information c. The conditional input can be virtually anything to specific or limit the generation space of the end product, e.g. a search parameter or a vector of search parameters. The generator 32 generates synthetic samples by mapping the noise vector z and conditional information c to the data space. Mathematically, the generator's output can be represented as G (z, c).

The discriminator 34 is, for example, a deep convolutional network (DCN) and inputs real samples x from a set of training data 36 from the dataset, the samples G (z, c) generated by the generator 32 as well as the conditional information c. The discriminator 34 outputs a probability D indicating the likelihood that the respective input sample x and G (z, c) is real. Mathematically, the output of the discriminator can be represented as D (x, c) and D (G (z, c), c).

The objective function of the conditional GAN includes two components, one function for the generator 32 and one function for the discriminator 34. As already discussed above for GANs in general, the generator 32 aims to minimize the likelihood that the discriminator 34 correctly classifies its generated samples as fake. Conversely, the discriminator aims to maximize this likelihood to classify the generator's output as fake while correctly classifying real samples as real.

Accordingly, the loss function of the generator 32 encourages the generator 32 to produce samples that are classified as real by the discriminator 34. This can be formulated as

$$\min_G \max_D E_{x \sim p_{\text{data}}(x)}[\log D(x,c)] + E_{z \sim p_z(z)}[\log(1 - D(G(z,c),c))].$$

The loss function of the discriminator 34 encourages the discriminator 34 to correctly classify both real and generated samples. This can be formulated as

$$\max_D \min_G E_{x \sim p_{data}(x)}[\log D(x,c)] + E_{z \sim p_z(z)}[\log(1 - D(G(z,C),C))]$$

Accordingly, the generator 32 and discriminator 34 are trained iteratively in a minimax game. The generator 32 tries to generate samples that are increasingly difficult for the discriminator 34 to classify as fake, while the discriminator 34 tries to improve the ability to distinguish between real and fake samples, given the conditional information c.

Conditional GANs may be utilized to control the attributes of the generated samples, such as generating images of a specific class or with certain characteristics or, as in the present disclosure, to generate data of a specific sort or with certain characteristics. Accordingly, as described herein, the generator 32 of the conditional GAN 30 is used to generate new data depending on the input condition c, and the discriminator 34 may be used to assess the validity of the data generated by the generator 32. In embodiments, the random noise input for the generator 32 is varied for generating a set of first data fields for a search request in order to produce a certain minimum number of varying first data fields for the conditional information c.

The present methodologies can be applied in various particular use cases. For example, the first data fields may represent relatively static data which rarely changes over time, while the second data fields may represent relatively volatile data which regularly changes over time. In such scenarios, retrieving only the more volatile data from the original data source 4 is favorable in terms of network utilization and computational load on the original data source. At the same time, using the generative AI model 6 to generate the more static data may be advantageous in terms of response time and network utilization, compared to contacting an original data source 4 with significant technical overhead due to a large search space for traditional database searches and/or heavy computational resources due to complex computation rules and chains.

Non-limiting use cases that can be envisaged for the present methodologies include online web shops offering products and services, navigation systems, and network routing. Further use cases relate to search engines, recommendation systems, content management systems, expert systems, log systems, big data system, or other systems that require efficient search request processing. The present methodologies may be applied to various domains, such as e-commerce, social media, news, entertainment, or other suitable domains. The particular content, data structures of the data fields and search results, request/response protocol, organization of the database system 4, and so on, depend on the particular use case, and the present methodologies are applicable to all sorts of these aspects.

For example, in a use case of a travel search platform, the generative AI model 6 may generate basic search result content such as flights from origins to destinations at certain days by certain airlines and with available options (e.g. free baggage) and/or offered ancillary services (e.g. vegan meal, bulk baggage), while related, more volatile content such as the flight prices and additional prices for ancillary services may be retrieved from a database system 4. Likewise, in the use case of a navigation system, routes from origins to destinations may be generated by the generative AI model 6, while currently required travel time may be retrieved from an online traffic system. In the example of a web shop, the information about offered products and their characteristics (color, size, price, etc.) may be generated by the generative AI model 6, while current availability and delivery time may be retrieved by an online tracking and inventory system. Numerous other use cases can be envisaged as well.

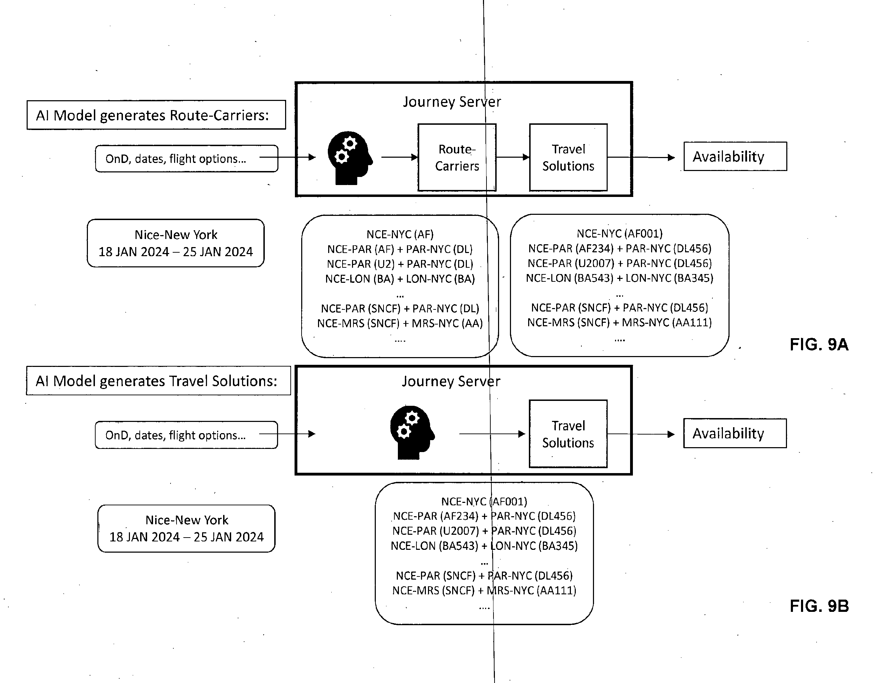

A non-limiting illustrative example for the exemplary use case of a travel search system is given by FIG. 9. Here, the search platform 2 is given as a journey server which processes and responds to search requests for flights (or other priced travel solutions). The journey server hosts the generative AI model which produces flight data using origin and destination (OnD), travel dates and further flight options (e.g. booking class) as input (conditional information c). To check actual availability of the flights, an external database system is contacted. FIG. 9 shows two options for this use case. In FIG. 9A, the generative AI model 6 generates travel legs generally operated by airlines and railway operators and combines the travel legs from the requested origin to the destination. Additional logic, for example also including a retrieval from a flight database system, then determines specific flights and trains for the combined legs. In FIG. 9B, the generative AI model 6 generates the complete flight/train connections including the specific flights/trains from the requested origin to the requested destination.

More specifically, in both variants of FIG. 9, the journey server receives a search request indicating origin and destination (Nice to New York) and a time frame for the flight (18 to 25 January 2024). In FIG. 9A, the journey server uses the generative AI model 6 to determine route-carrier combinations. For the requested travel from Nice to Paris, Air France (AF) offers a direct flight, and various other connecting travel being composed of at least two travel legs are generated as well, e.g. a flight from Nice (NCE) to Paris (PAR) by Air France and a connecting flight from Paris to New York (NYC) by Delta (DL). Other options generated by the generative AI model 6 include a railway connection from Nice to Paris by SCNF and then a connecting flight further to New York by Delta, or, alternatively, an SNCF railway connection to Marseille (MRS) and then an American Airline (AA) flight from Marseille to New York. The database request/response process 24 may then yield which specific flights (e.g. AF234 from Nice to Paris and then connecting flight DL456 further to New York) fit the generated abstract travel legs. A still further database request/response process 24 may yield which of the specific flights and trains are still available. In the variant of FIG. 9B, the generative AI model 6 generated the specific flights and trains directly, and the database request/response process 24 yields the actual availability of the determined flights/trains.

Note that the present methodologies do not exclude the additional content retrieval from an original and current data source. For example, third data fields may be foreseen to form a part of the completed search results, and the content of the third data fields may need to be obtained from an original data source. Such retrieval from an original data source may e.g. be performed in parallel to retrieving second data fields from the database system 4. For example, the search platform 2 may first generate a number of first data fields using the generative AI model 6, and then contact the database system 4 to retrieve second data fields and contact an original data source to retrieve third data fields in parallel. Once the database system 4 and the original data source have responded with their content, the search platform 2 then assembles the completed search results comprising the first, second and third data fields and returns the completed search results in the manner described above.

For example, in the non-limiting use case of a flight search platform, the first data fields generated by the generative AI model 6 may relate to flight data (airline, origin, destination, day, ancillary services), the second data fields retrieved from the database system 4 may relate to prices specifically for the ancillary services (e.g. bags, children, pets, special meal, disabled persons) and the third data fields to be populated by requesting the original data source may relate to the price of the flight itself. Other use cases are envisaged as well.

In summary, the present methodologies enable a search platform 2 to efficiently handle search requests in terms of processing resources and response times involved. Efficiency is promoted by using a generative AI model 6 which at least partially contributes in local and thus efficient response data generation to limit response data obtaining from the database system 4. In other words, an - in terms of computation resources and processing time - efficient generation of first data fields effectively limits the search space for the following database retrieval process with the database system 4, resulting in an overall efficient search request processing. The optional ML model 10 may avoid hallucination effects of the generative AI model 6 and thus further contribute to a well-defined search space to supplement the search request by retrieving second data fields from the database system 4.

Note that the present methodologies as described above, if applied by a search platform 2, do not necessarily have to be applied for all search requests received by the search platform 2. For example, the search platform 2 may apply the methodologies for some types of search requests, but may not apply the methodologies for other types of search requests which are then handled in a traditional manner. Or the search platform 2 may apply the methodologies for search requests from some clients 8, but not for search requests from other clients. Or the search platform may apply the methodologies during some periods of time, but not during other periods of time, etc.

As mentioned above, the present methodologies may be provided by a computer-implemented method, by an apparatus such as a controller as well as by computer program instructions which, when executed by at least one processor, realizes the operations described above.

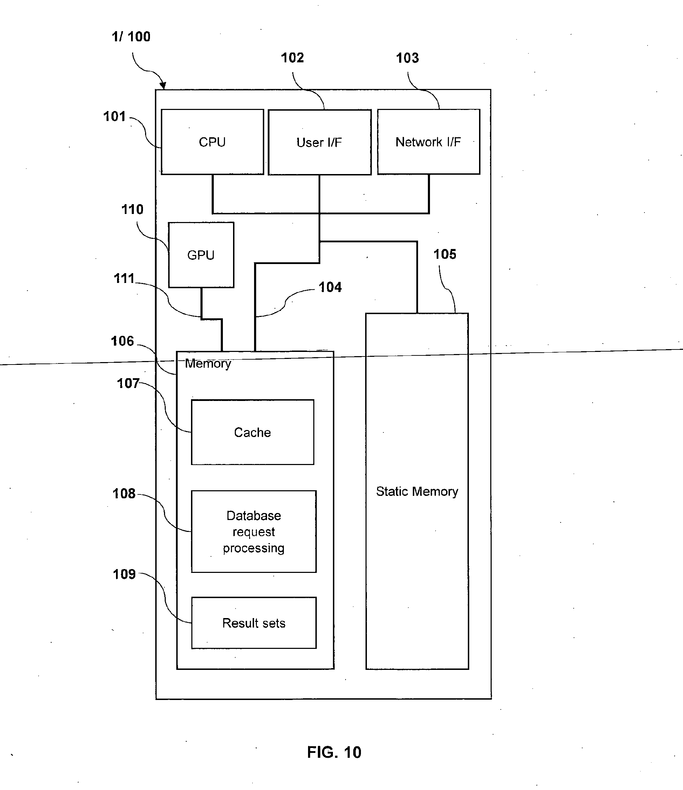

FIG. 10 is a diagrammatic representation of the internal components of a computing machine 100 implementing the functionality of the search platform 1. The computing machine 100 includes a set of instructions to cause the computing machine 100 to perform any of the methodologies discussed herein when executed by the computing machine 100. The computing machine 100 includes at least one processor 101, a main memory 106 and a network interface device 103 which communicate with each other via a bus 104. Optionally, the computing machine 100 may further include a static memory 105 and a disk-drive unit. A display, an alpha-numeric input device and a cursor control device may be provided as examples of user interface 102. The network interface device 103 connects the computing machine 100 implementing the search platform with a client 8 as well as the Generative AI model 6 and the database 4.

Computing machine 100 includes a memory 106 such as main memory, random access memory (RAM) and/or any further volatile memory. The memory 106 may store temporary data and program data 107 to facilitate the functionality of the search platform 2, including program data to realize receiving 11 the search request, generating 14 the first data fields, determining 15 the second data fields, assembling 16 the search results and returning 18 the search response. In addition, the memory 106 may store temporary data and program data 107 to realize the other optional functionalities of the search platform 2 described herein.

A set of computer-executable instructions embodying any one, or all, of the methodologies described herein, resides completely, or at least partially, in or on a machine-readable storage medium, e.g., in the static memory 105 or, when loaded and being executed, in the main memory 106. For example, the instructions may include software processes implementing the search request processing functionality of the search platform 2. The instructions may further be transmitted or received as a propagated signal via the Internet through the network inter-face device 103 or via the user interface 102. Communication within computing machine 100 is performed via a bus 104. Basic operation of the computing machine 100 is controlled by an operating system which is also located in the memory 106, the at least one processor 101 and/or the static memory 105.

As mentioned above, the computing machine 100 may also be equipped with a graphical processing unit (GPU) 110 or multiple GPUs in order to specifically implement neural-network-related operations such as matrix multiplications to generate the output of the ML model 6. The GPU 100 may be arranged to directly access the memory 106 via a GPU bus 111.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently. Moreover, any of the flowcharts, sequence diagrams, and/or block diagrams may include more or fewer blocks than those illustrated consistent with embodiments and examples.

The terminology used herein is for the purpose of describing particular embodiments and examples, and is not intended to be limiting. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details.

**Claims**

1. A method to process search requests at a search platform, the search platform being communicatively coupled to a plurality of clients as well as, via a communication interface, to a database system, the method comprising, at the search platform:

   in response to receiving a search request from one of the plurality of clients requesting one or more search results comprising at least two sets of data fields, namely a first set of at least one data field and a second set of at least one data field, determining a number of search results corresponding to the search request comprising:

   generating one or more values for the first set of data fields by using a generative artificial intelligence model;
   determining, on the basis of the generated one or more values for the first set of data fields and by using the database system, one or more values for the second set of data fields;
   assembling one or more search results comprising the generated one or more values for the first set of data fields and the determined one or more values for the second set of data fields;

   returning the at least one search result to the client.

2. The method of claim 1, wherein determining a number of search results corresponding to the search request further comprises validating the generated one or more values for the first set of data fields by using a machine-learning model.

3. The method of claim 2, wherein validating the generated one or more values for the first set of data fields by using a machine-learning model comprises

   determining, using the machine-learning model, that a first generated value for the first set of data fields is likely to correspond to data retrievable from the database system and using the first generated value to determine the one or more values for the second set of data fields;
   determining, using the machine-learning model, that a second generated value for the first set of data fields is unlikely to correspond to data retrievable from the database system and discarding the second generated value.

4. The method of claim 3, wherein determining, using the machine-learning model, that a first generated value for the first set of data fields is likely to correspond to data retrievable from the database system comprises determining a confidence level of the first generated value for the first set of data fields being at least at a given confidence threshold.

5. The method of claim 4, wherein the confidence threshold is set by the search request.

6. The method of any one of claims 2 to 5, wherein the generative artificial intelligence model and the machine-learning model constitute a conditional generative adversarial network, wherein the generative artificial intelligence model is the generator of the conditional generative adversarial network and the machine-learning model is the discriminator of the conditional generative adversarial network.

7. A computing system comprising the computing platform, wherein the computing system is arranged to perform the method according to any one of claims 1 to 6.

8. A computer program product comprising a computer-readable medium storing program code which executes the method of any one of claims 1 to 6 when run by a computer.

9. A computer program implementing the method of any one of claims 1 to 6 when run ' by a computer.

FIG. 1

Start

receiving a search request from a client requesting search results with at least a first set of at least one data field and a second set of at least one data field — 11

determining a number of search results corresponding to the search request — 12

generating one or more values for the first set of data fields by using a generative artificial intelligence model — 14

determining, on the basis of the generated one or more values for the first set of data fields and by using the database system, one or more values for the second set of data fields — 15

assembling one or more search results comprising the generated one or more values for the first set of data fields and the determined one or more values for the second set of data fields — 16

returning the at least one search result to the client — 18

End

FIG. 2

FIG. 3

First data fields

Second data fields

| Parameter 1 | Parameter 2 |
|---|---|
| | |
| | |
| | |
| | |
| | |
| | |

| Parameter 3 | Parameter 4 | Parameter 5 |
|---|---|---|
| AAA | BBB | 563 |
| SUP | GHI | 815 |
| POI | ZTR | 514 |
| DEF | BBB | 667 |
| EIN | BBB | 811 |
| CET | DAX | 913 |

FIG. 4

FIG. 5

EP 4 617 902 A1

| ID | Parameter 1 | Parameter 2 |
|----|-------------|-------------|
| 1 | RUT | 980 |
| 2 | WIS | 850 |

| Parameter 3 | Parameter 4 | Parameter 5 |
|-------------|-------------|-------------|
| AAA | BBB | 563 |
| SUP | GHI | 815 |
| POI | ZTR | 514 |
| DEF | BBB | 667 |
| EIN | BBB | 811 |
| CET | DAX | 913 |

FIG. 6

FIG. 7

FIG. 8

**AI Model generates Route-Carriers:**

OnD, dates, flight options...

Journey Server

Route-Carriers → Travel Solutions → Availability

Nice-New York
18 JAN 2024 – 25 JAN 2024

NCE-NYC (AF)
NCE-PAR (AF) + PAR-NYC (DL)
NCE-PAR (U2) + PAR-NYC (DL)
NCE-LON (BA) + LON-NYC (BA)
...
NCE-PAR (SNCF) + PAR-NYC (DL)
NCE-MRS (SNCF) + MRS-NYC (AA)
....

NCE-NYC (AF001)
NCE-PAR (AF234) + PAR-NYC (DL456)
NCE-PAR (U2007) + PAR-NYC (DL456)
NCE-LON (BA543) + LON-NYC (BA345)
...
NCE-PAR (SNCF) + PAR-NYC (DL456)
NCE-MRS (SNCF) + MRS-NYC (AA111)
....

**FIG. 9A**

**AI Model generates Travel Solutions:**

OnD, dates, flight options...

Journey Server

Travel Solutions → Availability

Nice-New York
18 JAN 2024 – 25 JAN 2024

NCE-NYC (AF001)
NCE-PAR (AF234) + PAR-NYC (DL456)
NCE-PAR (U2007) + PAR-NYC (DL456)
NCE-LON (BA543) + LON-NYC (BA345)
...
NCE-PAR (SNCF) + PAR-NYC (DL456)
NCE-MRS (SNCF) + MRS-NYC (AA111)
....

**FIG. 9B**

1/ 100

102    103

101

CPU    User I/F    Network I/F

110

GPU

111    104    105

106

Memory

107

Cache

108

Database
request
processing

Static Memory

109

Result sets

**FIG. 10**

Europäisches
Patentamt

European
Patent Office

Office européen
des brevets

## EUROPEAN SEARCH REPORT

**Application Number**

EP 24 31 5094

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/196199 A1 (STEFANI STEFANO [US]) 22 June 2023 (2023-06-22) * paragraphs [0017], [0021], [0022], [0031], [0043], [0063] * * figures 1, 2 * | 1-9 | INV. G06F16/2458 G06N3/045 |
| X | US 2023/334046 A1 (VIG AKSHAT [US] ET AL) 19 October 2023 (2023-10-19) * paragraphs [0018], [0061] - [0073] * * figures 1, 2, 9 * | 1-9 | |
| X | US 2023/281193 A1 (ALAKUIJALA JYRKI [CH] ET AL) 7 September 2023 (2023-09-07) * paragraphs [0038], [0040], [0041], [0044], [0046], [0047], [0049], [0055] - [0060], [0062], [0065] * * figures 1, 4, 6 * | 1-9 | |

| | | | TECHNICAL FIELDS SEARCHED (IPC) |
|---|---|---|---|
| | | | G06F G06N |

The present search report has been drawn up for all claims

| Place of search | Date of completion of the search | Examiner |
|---|---|---|
| The Hague | 9 July 2024 | Martínez Espuche, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 31 5094

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | Publication date |
|---|---|---|---|
| US 2023196199 A1 | 22-06-2023 | US 11501202 B1 | 15-11-2022 |
| | | US 2023196199 A1 | 22-06-2023 |
| US 2023334046 A1 | 19-10-2023 | US 11726999 B1 | 15-08-2023 |
| | | US 2023334046 A1 | 19-10-2023 |
| US 2023281193 A1 | 07-09-2023 | CN 110574021 A | 13-12-2019 |
| | | CN 117312494 A | 29-12-2023 |
| | | EP 3602349 A1 | 05-02-2020 |
| | | JP 6918140 B2 | 11-08-2021 |
| | | JP 2020518912 A | 25-06-2020 |
| | | KR 20200003132 A | 08-01-2020 |
| | | US 2020142888 A1 | 07-05-2020 |
| | | US 2023281193 A1 | 07-09-2023 |
| | | WO 2018200979 A1 | 01-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11651205 B2
- US 10642846 B2
- US 11481416 B2